(19) Europäisches Patentamt / European Patent Office / Office européen des brevets

(11) **EP 4 411 857 A1**

(12) **EUROPEAN PATENT APPLICATION**
published in accordance with Art. 153(4) EPC

(43) Date of publication:
07.08.2024 Bulletin 2024/32

(21) Application number: 22942407.2

(22) Date of filing: 12.10.2022

(51) International Patent Classification (IPC):
*H01M 4/13* (2010.01)        *H01M 4/62* (2006.01)

(52) Cooperative Patent Classification (CPC):
H01M 4/04; H01M 4/13; H01M 4/139; H01M 4/38;
H01M 4/62; H01M 10/0525; H01M 10/42;
Y02E 60/10

(86) International application number:
PCT/CN2022/124775

(87) International publication number:
WO 2023/221380 (23.11.2023 Gazette 2023/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.05.2022 CN 202210543741

(71) Applicant: Contemporary Amperex Technology
Co., Limited
Ningde, Fujian 352100 (CN)

(72) Inventors:
• LIU, Xiaomei
  Ningde, Fujian 352100 (CN)
• LI, Chengfeng
  Ningde, Fujian 352100 (CN)
• YANG, Longfei
  Ningde, Fujian 352100 (CN)
• CHEN, Yongai
  Ningde, Fujian 352100 (CN)

(74) Representative: Gong, Jinping
CocreateIP
Neumarkterstr. 21
81673 München (DE)

(54) **NEGATIVE ELECTRODE SHEET AND MANUFACTURING METHOD THEREFOR, SECONDARY BATTERY, BATTERY MODULE, BATTERY PACK, AND ELECTRICAL DEVICE**

(57) This application relates to a negative electrode plate and a preparation method thereof, a secondary battery, a battery module, a battery pack, and an electric apparatus. The negative electrode plate includes a negative electrode current collector and a negative electrode film layer disposed on at least one surface of the negative electrode current collector, where the negative electrode film layer includes a negative electrode active material layer, a lithium supplement layer, and a polymer layer that are stacked. The negative electrode active material layer is located on the negative electrode current collector, the lithium supplement layer is located on a side of the negative electrode active material layer back away from the negative electrode current collector, and the polymer layer is located on a side of the lithium supplement layer back away from the negative electrode active material layer.

EP 4 411 857 A1

**Description**

This application claims priority to Chinese patent application No. CN2022105437419, filed on May 19, 2022 and entitled "NEGATIVE ELECTRODE PLATE AND PREPARATION METHOD THEREOF, SECONDARY BATTERY, BATTERY MODULE, BATTERY PACK, AND ELECTRIC APPARATUS", which is incorporated herein by reference in its entirety.

**TECHNICAL FIELD**

This application relates to the field of secondary battery technologies, and in particular, to a negative electrode plate and a preparation method thereof, a secondary battery, a battery module, a battery pack, and an electric apparatus.

**BACKGROUND**

Due to the increasing quality demands of the consumer market for secondary batteries, how to effectively improve the cycle life and energy density of batteries has become a research focus in the field of secondary batteries. Research has revealed that in the initial charging process of lithium-ion batteries, organic electrolytes can undergo reduction and decomposition on the surface of the negative electrode such as graphite. This leads to the formation of a solid electrolyte interphase film, permanently consuming a significant amount of lithium from the positive electrode. As a result, the first-cycle coulombic efficiency is lowered, reducing the capacity and energy density of the lithium-ion battery. To address this issue, researchers have investigated pre-lithiation technology, which involves pre-lithiating electrode materials for lithium supplementation, so as to offset the irreversible lithium loss caused by the formation of the SEI film. This can effectively enhance the overall capacity and energy density of the battery.

The pre-lithiation technology can be divided into negative-electrode lithium supplementation and positive-electrode lithium supplementation. In conventional technologies, compared with the negative-electrode lithium supplementation, the positive-electrode lithium supplementation features greater operability, higher safety, and no specific equipment requirements, and thus is applied widely. However, the positive-electrode lithium supplementation leads to a decrease in the proportion of active materials in the positive electrode. For instance, when $Li_5FeO_4$ is used, its percentage needs to reach 7%, and its product after the lithium supplementation is inactive. This affects the further increase of energy density of the lithium-ion batteries.

**SUMMARY**

In view of the technical problem in the background, it is necessary to provide a negative electrode plate and a manufacturing method thereof, a secondary battery, a battery module, a battery pack, and an electric apparatus. Safe lithium supplementation can be achieved on the negative electrode plate, effectively alleviating the problems of poor safety in the negative-electrode lithium supplementation and limited energy density improvement due to the positive-electrode lithium supplementation in conventional technologies.

To achieve the foregoing objective, a first aspect of this application provides a negative electrode plate, including a negative electrode current collector and a negative electrode film layer disposed on at least one surface of the negative electrode current collector. The negative electrode film layer includes a negative electrode active material layer, a lithium supplement layer, and a polymer layer that are stacked.

The negative electrode active material layer is located on the negative electrode current collector, the lithium supplement layer is located on a side of the negative electrode active material layer back away from the negative electrode current collector, and the polymer layer is located on a side of the lithium supplement layer back away from the negative electrode active material layer.

Compared with the prior art, this application includes at least the following beneficial effects:
In the technical solution of this application, lithium supplementation is performed by disposing the lithium supplement layer on the surface of the negative electrode active material layer, avoiding the complex process of lithium supplementation by coating the surface of negative-electrode active-material particles in conventional technologies, and addressing compatibility issues with water-based negative electrode preparation processes. The polymer layer being disposed on the surface of the lithium supplement layer can effectively prevents reactions between the lithium supplement layer and water or oxygen, thereby enhancing the safety and efficiency of the negative-electrode lithium supplementation.

In any embodiment of this application, a material of the polymer layer includes one or more of polymethyl methacrylate, polyethylene oxide, polyacrylonitrile, polystyrene, perfluoropolyether, dimethyl silicone oil, and a block copolymer of methyl methacrylate-propylene sulfite.

In any embodiment of this application, the polymer layer includes a first polymer and a second polymer. The first polymer includes one or more of polymethyl methacrylate, polyethylene oxide, polyacrylonitrile, polystyrene, and the block copolymer of polymethyl methacrylate-propylene sulfite, and the second polymer includes perfluoropolyether and/or dimethyl silicone oil.

In any embodiment of this application, a mass ratio of the first polymer to the second polymer is (1-9): 1.

In any embodiment of this application, the negative electrode film layer is disposed on the surface on both sides of the negative electrode current collector.

In any embodiment of this application, the polymer layer included in the negative electrode plate has a thickness of 1 $\mu$m to 12 $\mu$m.

In any embodiment of this application, a material of the lithium supplement layer includes elemental lithium.

In any embodiment of this application, the lithium supplement layer includes a plurality of striped hollow gaps parallel to each other. The striped hollow gap has a width of 0.1 $\mu$m to 100 $\mu$m, and a solid portion between adjacent two of the striped hollow gaps has a width of 50 $\mu$m to 10 mm.

In any embodiment of this application, each lithium supplement layer has a thickness of 0.1 $\mu$m to 15 $\mu$m.

A second aspect of this application provides a secondary battery of which a preparation method includes infiltrating an electrode assembly in an electrolyte.

The electrode assembly includes the negative electrode plate according to any one of the foregoing embodiments, a separator, and a positive electrode plate, the separator being disposed between the negative electrode plate and the positive electrode plate.

In any embodiment of this application, a mass of the polymer layer accounts for 0.1% to 4% of a sum of masses of the polymer layer and the electrolyte.

A third aspect of this application provides a battery module, including the secondary battery according to one or more of the foregoing embodiments.

A fourth aspect of this application provides a battery pack, including the foregoing battery module.

A fifth aspect of this application provides an electric apparatus, including one or more of the secondary battery, the battery module, and the battery pack according to one or more of the foregoing embodiments.

A sixth aspect of this application provides a preparation method of the negative electrode plate according to any one of the foregoing embodiments, where the method includes the following steps:

forming the negative electrode active material layer on at least one surface of the negative electrode current collector;
forming the lithium supplement layer on a surface of the negative electrode active material layer; and
forming the polymer layer on a surface of the lithium supplement layer.

In any embodiment of this application, the forming the polymer layer on a surface of the lithium supplement layer includes the following steps:
dissolving a polymer in an organic solvent to prepare a polymer solution, applying the polymer solution to the surface of the lithium supplement layer to form a polymer coating layer, followed by drying, obtain the polymer layer.

In any embodiment of this application, the organic solvent includes one or more of dimethyl carbonate, diethyl carbonate, ethyl methyl carbonate, 1,3-dioxolane, diphenyl carbonate, propene sultone, propenyl-1,3 sultone, triphenyl phosphate, triphenyl phosphite, and sulfolane.

In any embodiment of this application, in the polymer solution, a mass percentage of the polymer is 1% to 15%.

For details of one or more embodiments of this application, see the accompanying drawings and description below. Other features, purposes, and advantages of this application will become apparent from the specification, the accompanying drawings, and the claims.

## BRIEF DESCRIPTION OF DRAWINGS

To describe the technical solutions in this application more clearly, the following briefly describes the accompanying drawings used in this application. Apparently, the accompanying drawings in the following description show only some embodiments of this application, and persons of ordinary skill in the art may still derive other drawings from these accompanying drawings without creative efforts.

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery in an embodiment of this application as a power source.

Reference signs are described as follows:
1. battery pack; 2. upper box body; 3. lower box body; 4. battery module; 5. secondary battery; 51. housing; 52. electrode assembly; and 53. cover plate.

## DESCRIPTION OF EMBODIMENTS

The following further describes this application with reference to specific embodiments. It should be understood that these specific embodiments are merely intended to illustrate this application but not to limit the scope of this application.

For better understanding of this application, this application is described more comprehensively below with reference to relevant accompanying drawings. Preferred embodiments of this application are provided in the accompanying drawings. However, this application can be realized in various different manners and is not limited to the embodiments described in this specification. On the contrary, the purpose of providing these embodiments is to enhance a more comprehensive understanding of the disclosed content of this application.

In addition, the terms "first" and "second" are merely for the purpose of description, and shall not be understood as any indication or implication of relative importance or any implicit indication of the number of technical features indicated. Therefore, a feature limited by "first" or "second" may explicitly or implicitly include at least one feature. In the description of this application, "multiple" means at least two such as two or three, unless otherwise explicitly specified. In the description of this application, "a plurality of" means at least one such as one or two, unless otherwise explicitly specified.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "and/or" used herein includes any and all combinations of one or more associated items listed.

In this application, the technical features described in an open manner include both closed technical solutions composed of the listed features and open technical solutions incorporating the listed features.

In this application, when a numerical range is involved, unless otherwise specified, the values within the range are considered continuous, encompassing both the minimum and maximum of the range, as well as each individual value between this minimum and maximum. Furthermore, when the range refers to an integer range, it includes each integer between the minimum and maximum values therein. Additionally, when multiple ranges are provided for the description of features or properties, those ranges can be combined. In other words, unless otherwise indicated, all ranges disclosed in this specification should be understood to encompass any and all subranges included therein.

The percentage mentioned in this application, unless otherwise specified, refers to mass percentage for solid-liquid mixtures and solid-solid mixtures, and refers to volume percentage for liquid-liquid mixtures.

The percentage concentration mentioned in this application, unless otherwise specified, refers to the final concentration. The final concentration refers to the proportion of an added component in a system after the component is added in the system.

The temperature parameter in this application, unless specifically specified, allows for both constant-temperature treatment and treatment within a specific temperature range. The constant-temperature treatment allows the temperature to fluctuate within a precision range controlled by an instrument. In traditional technologies, lithium supplementation is usually performed by coating the surface of the negative electrode active material with a lithium supplement agent. However, the negative-electrode lithium supplement agent is typically elemental lithium, which is highly reactive and prone to react with elements like water and oxygen in air. As a result, this lithium supplement process is incompatible with water-based negative electrode preparation process, requiring the use of an organic solvent, leading to further environmental pollution. To address this issue, people additionally apply a polymer protective layer to the surface of the lithium supplement layer, so as to isolate it from water and oxygen. However, if the polymer protective layer is soluble in the electrolyte, the adhesion between active material particles deteriorates after the injected electrolyte dissolves the layer. Conversely, if the polymer protective layer is insoluble in the electrolyte, the impedance of the battery is increased, decreasing the electrical performance.

Based on the foregoing background, an embodiment of this application provides a negative electrode plate, including a negative electrode current collector and a negative electrode film layer disposed on at least one surface of the negative electrode current collector. The negative electrode film layer includes a negative electrode active material layer, a lithium supplement layer, and a polymer layer that are stacked.

The negative electrode active material layer is located on the negative electrode current collector, the lithium supplement layer is located on a side of the negative electrode active material layer back away from the negative electrode current collector, and the polymer layer is located on a side of the lithium supplement layer back away from the negative electrode active material layer.

Regardless of any theory, in the technical solution of this application, lithium supplementation is performed by disposing the lithium supplement layer on the surface of the negative electrode active material layer, avoiding the complex process of lithium supplementation by coating the surface of negative-electrode active-material particles in conventional technologies, and addressing compatibility issues with water-based negative electrode preparation processes. The polymer layer being disposed on the surface of the lithium supplement layer can effectively prevents reactions between the lithium supplement layer and water or oxygen, thereby enhancing the safety and efficiency of the negative-electrode lithium supplementation.

The inventors have found through in-depth research that when the negative electrode plate in this application satisfies the foregoing design conditions and optionally satisfies one or more of the following conditions, the safety and efficiency of the negative-electrode lithium supplementation can be further improved.

In some embodiments, a material of the polymer layer includes one or more of polymethyl methacrylate (PMMA), polyethylene oxide (PEO), polyacrylonitrile (PAN), polystyrene (PS), perfluoropolyether (PEFE), dimethyl silicone oil (PDMS), and a block copolymer of methyl methacrylate-propylene sulfite. A proper type of polymer is used to prepare the polymer layer, and when the electrode plate comes into contact with the electrolyte, the polymer layer is dissolved in the electrolyte. This avoids the increase in battery impedance caused by the presence of the protective layer.

In some embodiments, the polymer layer includes a first polymer and a second polymer. The first polymer includes one or more of polymethyl methacrylate, polyethylene oxide, polyacrylonitrile, polystyrene, and the block copolymer of polymethyl methacrylate-propylene sulfite, and the second polymer includes perfluoropolyether and/or dimethyl silicone oil. After the first polymer is swollen or dissolved, the conductivity becomes large, which helps to improve the electrical performance of the battery. The second polymer has poor conductivity but exhibits good resistance to water and gas, effectively protecting the lithium supplement layer from erosion by water and oxygen. The first polymer and the second polymer being combined for use can protect the lithium supplement layer while improving the electrical performance of the battery.

In some embodiments, a mass ratio of the first polymer to the second polymer is (1-9):1. The mass ratio of the first polymer to the second polymer may further be, for example, 1:1.5, 1:2, 1:2.5, 1:3, 1:3.5, 1:4, 1:4.5, 1:5, 1:5.5, 1:6, 1:6.5, 1:7, 1:7.5, 1:8, or 1:8.5. Controlling the mass ratio of the two within an appropriate range can achieve a greater balance between the performance of protection for the lithium supplement layer and the electrical performance of the battery.

In some embodiments, the negative electrode film layer is disposed on the surface on both sides of the negative electrode current collector.

In some embodiments, the polymer layer included in the negative electrode plate has a thickness of 1 $\mu$m to 12 $\mu$m. The thickness of the polymer layer may further be, for example, 1.5 $\mu$m, 2 $\mu$m, 2.5 $\mu$m, 3 $\mu$m, 3.5 $\mu$m, 4 $\mu$m, 4.5 $\mu$m, 5 $\mu$m, 5.5 $\mu$m, 6 $\mu$m, 6.5 $\mu$m, 7 $\mu$m, 7.5 $\mu$m, 8 $\mu$m, 8.5 $\mu$m, 9 $\mu$m, 9.5 $\mu$m, 10 $\mu$m, 10.5 $\mu$m, 11 $\mu$m, or 11.5 $\mu$m. As the thickness of the polymer layer is set in the proper range, the polymer dissolved in the electrolyte has a proper concentration therein, which satisfies the protection effect and does not cause an excessively large viscosity of the electrolyte due to an excessively large concentration, so as to meet the basic use requirement.

The "thickness of the polymer layer" referred to here is the total thickness of the polymer layers included in the entire negative electrode plate. If there is only one polymer layer, its thickness is 1 $\mu$m to 12 $\mu$m. If there are two polymer layers, the sum of their thicknesses is 1 $\mu$m to 12 $\mu$m. When there are two polymer layers, their thicknesses can be equal or unequal.

In some embodiments, a material of the lithium supplement layer includes elemental lithium.

In some embodiments, the lithium supplement layer includes a plurality of striped hollow gaps parallel to each other. The striped hollow gap has a width of 0.1 $\mu$m to 100 $\mu$m, and a solid portion between adjacent two of the striped hollow gaps has a width of 50 $\mu$m to 10 mm. The width of the striped hollow gap may be, for example, 10 $\mu$m, 20 $\mu$m, 30 $\mu$m, 40 $\mu$m, 50 $\mu$m, 60 $\mu$m, 70 $\mu$m, 80 $\mu$m, or 90 $\mu$m. The width of the solid portion between adjacent two of the striped hollow gaps may be, for example, 100 $\mu$m, 200 $\mu$m, 300 $\mu$m, 400 $\mu$m, 500 $\mu$m, 600 $\mu$m, 700 $\mu$m, 800 $\mu$m, 900 $\mu$m, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, or 9.5 mm. The structure of the lithium supplement layer including the hollow gaps resembles a zebra stripe, where the stripes containing the lithium supplement layer and the hollow gaps without the lithium supplement layer are arranged parallel to each other. This allows for better infiltration of electrolyte into the electrode plate, and thus is conducive to improving the battery performance. Proper stripe width and gap width can benefit both the lithium supplement efficiency and infiltration.

In some embodiments, each lithium supplement layer has a thickness of 0.1 $\mu$m to 15 $\mu$m. The thickness of the lithium supplement layer may further be, for example, 1 $\mu$m, 1.5 $\mu$m, 2 $\mu$m, 2.5 $\mu$m, 3 $\mu$m, 3.5 $\mu$m, 4 $\mu$m, 4.5 $\mu$m, 5 $\mu$m, 5.5 $\mu$m, 6 $\mu$m, 6.5 $\mu$m, 7 $\mu$m, 7.5 $\mu$m, 8 $\mu$m, 8.5 $\mu$m, 9 $\mu$m, 9.5 $\mu$m, 10 $\mu$m, 10.5 $\mu$m, 11 $\mu$m, 11.5 $\mu$m, 12 $\mu$m, 12.5 $\mu$m, 13 $\mu$m, 13.5 $\mu$m, 14 $\mu$m, or 14.5 $\mu$m. Controlling the thickness of the lithium supplement layer in the proper range allows for more sufficient lithium supplementation in the battery and low costs.

The "thickness of each lithium supplement layer" referred to here is the thickness of an individual lithium supplement layer. If there is more than one lithium supplement layer in the electrode plate, the total thickness of the lithium supplement layers is the sum of the thicknesses of the lithium supplement layers.

An embodiment of this application further provides a secondary battery of which a preparation method includes infiltrating an electrode assembly in an electrolyte.

The electrode assembly includes the negative electrode plate according to any one of the foregoing embodiments, a separator, and a positive electrode plate, the separator being disposed between the negative electrode plate and the positive electrode plate.

After the electrode assembly is infiltrated in the electrolyte, the polymer layer in the negative electrode plate is dissolved in the electrolyte, avoiding increasing the impedance of the battery.

In some embodiments, a percentage of the mass of the polymer layer to the total mass of the polymer layer and the electrolyte is 0.1% to 4%. The percentage may further be, for example, 0.2%, 0.35%, 0.4%, 0.6%, 0.8%, 1%, 1.2%, 1.4%, 1.6%, 1.8%, 2%, 2.2%, 2.4%, 2.6%, 2.8%, 3%, 3.2%, 3.4%, 3.5%, 3.6%, or 3.8%. The mass percentage of the polymer layer being in the proper range can benefit the performance of protection for the lithium supplement layer before the dissolution and the viscosity of the electrolyte after the dissolution, avoiding adverse impact on the battery performance. When there are two types of polymers in the polymer layer, the mass ratio of the two polymers is 0.1% to 4%.

In some embodiments, the polymer layer includes both the first polymer and the second polymer, and the negative electrode film layer is disposed on both sides of the current collector. In this case, in the foregoing embodiment: the thickness of the polymer layer is denoted as D ($\mu$m), the percentage of the mass of the first polymer to the total mass of the polymer layer and the electrolyte is denoted as $wt_1$ (%), and the percentage of the mass of the first polymer to the total mass of the polymer layer and the electrolyte is denoted as $wt_2$ (%). In addition, the total mass of the electrolyte and polymer layer is denoted as m (g), the length of the negative electrode plate is denoted as a (mm), and its width is denoted as b (mm), the density of the first polymer is denoted as $\rho_1$ (g/cm$^3$), and the density of the second polymer is denoted as $\rho_2$ (g/cm$^3$). The foregoing parameters meet the following formula:

$$D = \frac{10^5 m}{2ab}\left(\frac{wt_1}{\rho_1} + \frac{wt_2}{\rho_2}\right)$$

According to the foregoing formula, when the values of $wt_1$ and $wt_2$ are both within the range of 0.1% to 2%, correspondingly, the total thickness of the two polymer layers is 1 $\mu$m to 12 $\mu$m. In this case, the dissolved polymer has no obvious negative impact on the viscosity and conductivity of the electrolyte. Additionally, the polymer layer before dissolution exhibits a good protective effect on the lithium supplement layer.

An embodiment of this application provides a battery module, including the secondary battery according to one or more of the foregoing embodiments.

An embodiment of this application provides a battery pack, including the foregoing battery module.

An embodiment of this application provides an electric apparatus, including one or more of the secondary battery according to one or more of the foregoing embodiments, the foregoing battery module, and the foregoing battery pack.

An embodiment of this application provides a preparation method of the negative electrode plate according to any one of the foregoing embodiments, where the method includes the following steps:

forming the negative electrode active material layer on at least one surface of the negative electrode current collector;
forming the lithium supplement layer on a surface of the negative electrode active material layer; and
forming the polymer layer on a surface of the lithium supplement layer.

In some embodiments, the forming the polymer layer on a surface of the lithium supplement layer includes the following steps:
dissolving a polymer in an organic solvent to prepare a polymer solution, applying the polymer solution to the surface of the lithium supplement layer to form a polymer coating layer, followed by drying, to obtain the polymer layer.

In some embodiments, the applying process includes one or more of spraying, coating, infiltrating, and microgravure printing. Coating is preferred.

In some embodiments, the organic solvent includes one or more of dimethyl carbonate (DMC), diethyl carbonate (DEC), ethyl methyl carbonate (EMC), 1,3-dioxolane, diphenyl carbonate, propene sultone, propenyl-1,3 sultone, triphenyl phosphate, triphenyl phosphite, and sulfolane. DEC is preferred.

In some embodiments, in the polymer solution, mass percentage of the polymer is 1% to 15%. In the polymer solution, the mass percentage of the polymer may further be, for example, 2%, 4%, 6%, 8%, 10%, 12%, or 14%. The polymer solution of the proper concentration allows for the applying times as few as possible and more uniform applying.

In addition, the following describes a secondary battery, a battery module, a battery pack, and an electric apparatus in this application with appropriate reference to the accompanying drawings.

An embodiment of this application provides a secondary battery.

Normally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

Positive electrode plate

The positive electrode plate includes a positive electrode current collector and a positive-electrode film layer disposed on at least one surface of the positive electrode current collector, and the positive-electrode film layer includes the positive-electrode active material in the first aspect of this application.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (matrices such as polypropylene (PP), polyethylene terephthalate (PET), polybutylene terephthalate (PBT), polystyrene (PS), or polyethylene (PE)).

In some embodiments, the positive electrode active material may be a well-known positive electrode active material used for battery in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyacrylonitrile (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

Negative electrode plate

The negative electrode plate is selected from the negative electrode plate according to the first aspect of this application.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (matrices such as polypropylene (PP), polyethylene terephthalate (PET), polybutylene terephthalate (PBT), polystyrene (PS), or polyethylene (PE)).

In some embodiments, the negative electrode active material in the negative electrode active material layer may be a well-known negative electrode active material used for batteries in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other promoters such as a thickener (for example, sodium carboxymethyl cellulose (CMC-Na)).

In some embodiments, the negative electrode active material layer may be prepared in the following manner: the foregoing constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode active material layer.

Electrolyte

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid. The electrolyte includes an electrolytic salt and a solvent.

In some embodiments, the electrolyte salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

Separator

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluorid. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

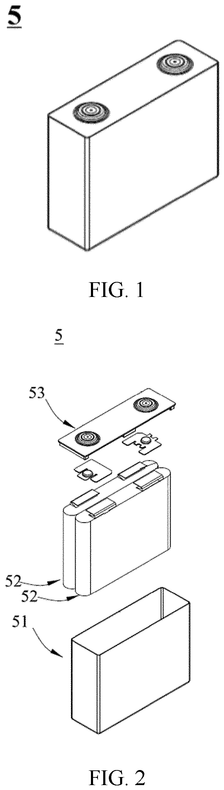

This application does not impose any special limitations on a shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and side plates connected onto the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. Electrolyte infiltrates into the electrode assembly 52. There may be one or more electrode assemblies 52 in the secondary battery 5, and persons skilled in the art may make choices based on actual requirements.

In some embodiments, the secondary battery may be assembled into a battery module, and the battery module may include one or more secondary batteries. The specific quantity may be chosen by persons skilled in the art according to use and capacity of the battery module.

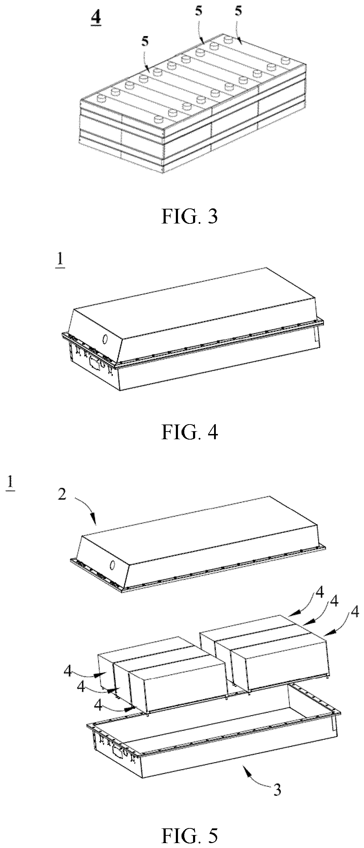

FIG. 3 shows a battery module 4 as an example. With reference to FIG. 3, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device, an electric vehicle, an electric train, a ship, a satellite system, an energy storage system, or the like, but is not limited thereto. The mobile device may be, for example, a mobile phone or a notebook computer; the electric vehicle may be, for example, a battery electric vehicle, a hybrid electric vehicle, a plug-in hybrid electric vehicle, an electric bicycle, an electric scooter, an electric golf vehicle, or an electric truck, but is not limited thereto.

The secondary battery, the battery module, or the battery pack may be selected for the electric apparatus based on requirements for using the electric apparatus.

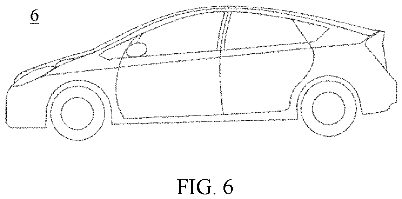

FIG. 6 shows an electric apparatus 6 as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

The following further describes this application in detail with reference to specific examples and comparative examples. For experimental parameters not specified in the following specific examples, priority reference is given to the guidelines given in this application, and reference may also be made to experimental manuals in the art or other experimental methods known in the art, or to the experimental conditions recommended by a manufacturer. It can be understood that the instruments and raw materials used in the following examples are more specific and may not be limited thereto in other specific examples; and the weights of the relevant components mentioned in the embodiments of the specification of this application can not only refer to the specific content of each component, but also indicate the proportional relation between the weights of the components. Therefore, any content of the relevant components scaled up or down in accordance with the specification of the embodiments of this application falls within the scope of this application. Specifically, the weight described in the specification of the embodiments of this application may be in μg, mg, g, kg, and other units of mass known in the chemical field. The reagents or instruments used are all conventional products that are commercially available if no manufacturer is indicated.

Example 1

(1) Preparation of positive electrode plate

The positive electrode active material lithium iron phosphate (with a specific capacity of 139 mAh/g), a conductive agent acetylene black, and a binder PVDF (polyvinylidene fluoride) were mixed at a mass ratio of 94:4:2, and the mixture was added with a solvent N-methylpyrrolidone and fully mixed and stirred well to obtain a positive electrode slurry. Then the positive electrode slurry was applied to two surfaces of the positive electrode current collector aluminum foil, where the coating amount of the positive electrode slurry was 0.224 g/1540.25 mm$^2$ (by weight excluding the solvent), followed by drying and cold pressing to obtain the positive electrode plate.

(2) Preparation of negative electrode plate

Step a: A negative electrode active material artificial graphite (with a gram capacity of 340 mAh/g), a conductive agent acetylene black, a binder SBR (styrene-butadiene rubber latex), and a binder CMC (sodium carboxymethyl cellulose) were mixed at a mass ratio of 95:1.5:3.1:0.4, and then added with a solvent deionized water, followed by a full stir and well mix, to obtain a negative electrode slurry. Next, the negative electrode slurry was applied to two surfaces of a negative electrode current collector copper foil, where the coating amount of the negative electrode slurry was 0.136 g/1540.25 mm$^2$ (by weight excluding the solvent), followed by drying and cold-pressing.

Step b: Two sheets of 10-μm thick lithium foils (with a gram capacity of 3861 mAh/g) were respectively laminated, through rolling, onto two surfaces of the product obtained in step a, to form two lithium supplement layers, where the amount of the lithium foil was 3.45 mg/1540.25 mm$^2$. Striped hollow gaps parallel to each other were present in the resulted lithium supplement layer, where the striped hollow gap had a width of 50 μm, and a solid portion between adjacent two of the striped hollow gaps had a width of 200 μm.

Step c: 100 g of PMMA (polymethyl methacrylate) was dissolved in 900 g of DMC (dimethyl carbonate) to obtain a PMMA solution with a mass fraction of 10%. The solution was sprayed onto two surfaces of the product obtained in step b, followed by drying under a flow of air at 25°C for 30 minutes, to obtain the negative electrode plate.

(3) Preparation of electrolyte

In an argon atmosphere glove box with a water content smaller than 10 ppm, EC (ethylene carbonate), PC (polycarbonate), and DMC (dimethyl carbonate) were mixed at a weight ratio of EC:PC:DMC=3:3:3, and added with LiPF$_6$, VC, DTD, and PS, followed a well stir, to obtain the electrolyte, where concentration of LiPF$_6$ in the lithium-ion battery electrolyte was 1 mol/L, and mass percentages of VC, DTD, and PS were 3%, 1%, and 1%, respectively.

(4) Preparation of separator

A polyethylene porous membrane was used as the separator.

5. Preparation of lithium-ion secondary battery

The positive electrode plate obtained in step (1), the separator in step (4), and the negative electrode plate produced in step (2) were stacked in sequence, with the separator positioned between the positive and negative electrode plates to provide separating function, so as to obtain a jelly cell. The jelly roll was placed in an outer package, injected with 1 mL of the electrolyte prepared in step (3), and then sealed to undergo formation, so as to obtain the lithium-ion secondary battery.

Examples 2 to 18

They were the same as example 1 in process (involving two types of polymers, and dissolving the two polymers together to form a solution), but there were differences in the composition, thickness, solvent used, and preparation process of the polymer layers. See Table 1 for details.

Example 19

It was basically consistent with example 1, with the difference in that when the negative electrode plate was prepared in step (2), the lithium supplement layer obtained in step b was a solid lithium supplement layer without striped hollow gaps.

Comparative example 1

It was basically the same as example 1, with the difference in that when the negative electrode plate was prepared in step (2), step c did not involve the solute PMMA.

Comparative example 2

It was basically the same as example 1, with the difference in that when the negative electrode plate was prepared in step (2), step c was skipped.

Comparative examples 3 and 4

They were the same as example 2 in process, but there were differences in the composition and thickness of the polymer layers. See Table 1 for details.

**Table 1**

| | Type of polymer | Polymer/(polymer+ electrolyte) (wt%) | | Thickness of polymer layer (μm) | Organic solvent | Preparation process of polymer layer |
| | | First polymer | Second polymer | | | |
|---|---|---|---|---|---|---|
| Example 1 | PMMA | 1.75 | / | 5 | 1,3-dioxolane | Spraying |
| Example 2 | PMMA and PDMS | 0.2 | 0.15 | 1 | 1,3-dioxolane | Spraying |
| Example 3 | PMMA and PDMS | 1 | 0.75 | 5 | 1,3-dioxolane | Spraying |
| Example 4 | PMMA and PDMS | 2 | 1.5 | 10 | 1,3-dioxolane | Spraying |
| Example 5 | PMMA and PDMS | 2 | 1.8 | 12 | 1,3-dioxolane | Spraying |
| Example 6 | PMMA and PFPE | 1 | 0.64 | 5 | 1,3-dioxolane | Spraying |
| Example 7 | PAN and PDMS | 1.2 | 0.57 | 5 | 1,3-dioxolane | Spraying |
| Example 8 | PS and PDMS | 1.3 | 0.6 | 5 | 1,3-dioxolane | Spraying |
| Example 9 | PEO and PDMS | 1.2 | 0.7 | 5 | 1,3-dioxolane | Spraying |
| Example 10 | Block copolymer of methyl methacrylate-propylene sulfite and PDMS | 1.0 | 0.63 | 5 | 1,3-dioxolane | Spraying |
| Example 11 | PMMA and PDMS | 1 | 0.75 | 5 | DMC | Spraying |
| Example 12 | PMMA and PDMS | 1 | 0.75 | 5 | DEC | Spraying |
| Example 13 | PMMA and PDMS | 1 | 0.75 | 5 | EMC | Spraying |

(continued)

|  | Type of polymer | Polymer/(polymer+ electrolyte) (wt%) | | Thickness of polymer layer (μm) | Organic solvent | Preparation process of polymer layer |
|---|---|---|---|---|---|---|
|  |  | First polymer | Second polymer |  |  |  |
| Example 14 | PMMA and PDMS | 1 | 0.75 | 5 | Sulfolane | Spraying |
| Example 15 | PMMA and PDMS | 1 | 0.75 | 5 | Diphenyl carbonate | Spraying |
| Example 16 | PMMA and PDMS | 1 | 0.75 | 5 | 1,3-dioxolane | Coating |
| Example 17 | PMMA and PDMS | 1 | 0.75 | 5 | 1,3-dioxolane | Infiltrating |
| Example 18 | PMMA and PDMS | 1 | 0.75 | 5 | 1,3-dioxolane | Micro gravure printing |
| Example 19 | PMMA | 1.8 | / | 5 | 1,3-dioxolane | Spraying |
| Comparative example 1 | / | / | / | / | 1,3-dioxolane | Spraying |
| Comparative example 2 | / | / | / | / | / | / |
| Comparative example 3 | PMMA and PDMS | 1 | 0.75 | 0.1 | 1,3-dioxolane | Spraying |
| Comparative example 4 | PMMA and PDMS | 1 | 0.75 | 15 | 1,3-dioxolane | Spraying |

Characterization test

The lithium-ion secondary batteries prepared in the foregoing examples and comparative examples were separately subjected to the following tests. For the results, see Table 2.

1. Lithium efficiency test of lithium-ion secondary battery

A sandwiched electrode was cut into small laminated plates of 41 mm × 49.5 mm, and the copper foil having the surface coated with lithium was cut into sections of 43.5 mm × 51 mm. A sandwich-structured lithium plate, the separator, the sandwiched electrode, the separator, and the lithium plate were stacked sequentially, such that the separator is sandwiched between the positive and negative electrodes for separating, to obtain a laminated jelly roll. The jelly roll was placed in the outer package, the prepared electrolyte was injected, and then the outer package was sealed, to obtain the lithium-ion secondary battery. Then, the sandwich-structured electrode, serving as the positive electrode and the lithium electrode, serving as the negative electrode, were charged to 2 V at 0.04C (1C means a current value at which a theoretical capacity is completely discharged in 1h), and then the charge capacity C1 (measured in mAh) was tested.

The lithium efficiency of the lithium-ion secondary battery = $C1/(41 \times 49.5/1540.25 \times m \times 2 \times 3.861) \times 100\%$, where m represents the total lithium supplement amount (mg).

(2) Room-temperature cycling performance test for lithium-ion secondary battery

At 25°C, the lithium-ion secondary battery was charged to a voltage of 3.65 V at a constant current of 1C (that is, a current value at which a theoretical capacity is completely discharged in 1h), charged to a current of 0.05C at a constant voltage of 3.65 V, left standing for 5 min, and then discharged to a voltage of 2.5 V at a constant current of 1C, which was one charge and discharge cycle. Discharge capacity of this cycle was discharge capacity of the 1st cycle.

The lithium-ion secondary battery was tested in the foregoing method for multiple charge and discharge cycles, until the discharge capacity of the lithium-ion secondary battery degraded to 80%, and the number of cycles of the lithium-ion secondary battery was recorded.

(3) High-temperature cycling performance test for lithium-ion secondary battery

At 60°C, the lithium-ion secondary battery was charged to a voltage of 3.65 V at a constant current of 1C (that is, a current value at which a theoretical capacity is completely discharged in 1h), charged to a current of 0.05C at a constant voltage of 3.65 V, left standing for 5 min, and then discharged to a voltage of 2.5 V at a constant current of 1C, which was one charge and discharge cycle. Discharge capacity of this cycle was discharge capacity of the 1st cycle. The lithium-ion secondary battery was tested according to the foregoing method for multiple charge and discharge cycles, and the discharge capacity at the 500th cycle was obtained through testing.

Capacity retention rate of the lithium-ion secondary battery after 500 cycles at 60°C = (discharge capacity at the 500th cycle/discharge capacity at the first cycle) $\times$ 100%.

**Table 2**

| | Lithium efficiency (100%) | Number of cycles after a capacity degrades to 80% at 25°C | Capacity retention rate after 500 cycles at 60°C (100%) |
|---|---|---|---|
| Example 1 | 73.4 | 1682 | 87.94 |
| Example 2 | 72.0 | 1630 | 85.70 |
| Example 3 | 78.3 | 2532 | 92.55 |
| Example 4 | 80.7 | 2223 | 92.00 |
| Example 5 | 80.2 | 2179 | 91.8 |
| Example 6 | 81.2 | 2532 | 93.21 |
| Example 7 | 79.4 | 2115 | 91.77 |
| Example 8 | 77.9 | 2502 | 92.50 |
| Example 9 | 76.5 | 1908 | 91.26 |
| Example 10 | 78.9 | 1488 | 89.78 |
| Example 11 | 79.4 | 2115 | 91.77 |
| Example 12 | 78.8 | 2570 | 92.61 |
| Example 13 | 79.1 | 2103 | 91.74 |
| Example 14 | 77.6 | 1390 | 89.31 |
| Example 15 | 79.2 | 2100 | 91.74 |
| Example 16 | 79.5 | 2622 | 92.69 |
| Example 17 | 78.2 | 2035 | 91.59 |
| Example 18 | 79.8 | 1555 | 90.07 |
| Example 19 | 70.1 | 1391 | 85.94 |
| Comparative example 1 | 71.2 | 1510 | 87.88 |
| Comparative example 2 | 70.1 | 1480 | 87.74 |
| Comparative example 3 | 71.9 | 1594 | 88.16 |
| Comparative example 4 | 80.7 | 1642 | 88.01 |

EP 4 411 857 A1

It can be learned from Tables 1 and 2 that the lithium efficiencies of the lithium-ion batteries obtained from various examples in this application are all maintained above 72%, exhibiting good cycling performance at both room temperature and 60°C. It can be learned by comparing example 1 with example 3 that when the amounts of the polymer remain unchanged, the combined use of two types of polymers not only achieves better protective effect, resulting in higher lithium efficiency, but also exhibits better cycling performance of the batteries. It can be learned by comparing examples 2 to 5 that as the thickness of the polymer layer increases, both lithium efficiency and cycling performance are improved and then declined. Therefore, a thickness of around 5 $\mu$m can better balance requirements of the protective effect for the lithium supplement layer and of the electrical performance of the battery. It can be learned by comparing examples 3 with examples 11 to 15 that coating with polymers dissolved in different types of solvents results in slightly different battery performances. This may be attributed to the residual solvent in the polymer layer after drying, where the best effect is achieved when DEC is used as a solvent. It can be learned by comparing example 3 with examples 16 to 18 that different applying processes also have varying effects on battery performance, with the coating process exhibiting optimal effect, followed by the spraying process. It can be learned by comparing example 3 with example 19 that using the non-solid lithium supplement layer with striped hollow gaps can enhance the infiltration of the electrolyte into the electrode plate, thereby improving various performances of the battery.

For comparison, comparative example 1 with only a lithium supplement layer, and comparative example 2, a blank control group, with only solvent sprayed and no polymer are provided, and the batteries prepared in the two comparative examples show an obvious decrease in various performances. In comparative example 3, the polymer layer is excessively thin, resulting in poor protection effect, low lithium supplement efficiency, and poor battery performance. In comparative example 4, the polymer layer is excessively thick, which, while causing a high supplement efficiency, increases the impedance of the battery, resulting in a decrease in cycling performance.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this patent. It should be noted that those of ordinary skill in the art may further make several modifications and improvements without departing from the concept of this application, and these modifications and improvements also fall within the protection scope of this application. Therefore, the protection scope of this application should be subject to the appended claims, and the description and drawings may be used to interpret the content of the claims.

**Claims**

1. A negative electrode plate, comprising a negative electrode current collector and a negative electrode film layer disposed on at least one surface of the negative electrode current collector, wherein the negative electrode film layer comprises a negative electrode active material layer, a lithium supplement layer, and a polymer layer that are stacked;

   wherein the negative electrode active material layer is located on the negative electrode current collector, the lithium supplement layer is located on a side of the negative electrode active material layer back away from the negative electrode current collector, and the polymer layer is located on a side of the lithium supplement layer back away from the negative electrode active material layer.

2. The negative electrode plate according to claim 1, wherein a material of the polymer layer comprises one or more of polymethyl methacrylate, polyethylene oxide, polyacrylonitrile, polystyrene, perfluoropolyether, dimethyl silicone oil, and a block copolymer of methyl methacrylate-propylene sulfite.

3. The negative electrode plate according to claim 1 or 2, wherein the polymer layer comprises a first polymer and a second polymer, wherein the first polymer comprises one or more of polymethyl methacrylate, polyethylene oxide, polyacrylonitrile, polystyrene, and the block copolymer of polymethyl methacrylate-propylene sulfite, and the second polymer comprises perfluoropolyether and/or dimethyl silicone oil.

4. The negative electrode plate according to claim 3, wherein a mass ratio of the first polymer to the second polymer is (1-9): 1.

5. The negative electrode plate according to any one of claims 1 to 4, wherein the negative electrode film layer is disposed on the surface on both sides of the negative electrode current collector.

**6.** The negative electrode plate according to any one of claims 1 to 5, wherein the polymer layer comprised in the negative electrode plate has a thickness of 1 μm to 12 μm.

**7.** The negative electrode plate according to any one of claims 1 to 6, wherein a material of the lithium supplement layer comprises elemental lithium.

**8.** The negative electrode plate according to any one of claims 1 to 7, wherein the lithium supplement layer comprises a plurality of striped hollow gaps parallel to each other, wherein the striped hollow gap has a width of 0.1 μm to 100 μm, and a solid portion between adjacent two of the striped hollow gaps has a width of 50 μm to 10 mm.

**9.** The negative electrode plate according to any one of claims 1 to 8, wherein each lithium supplement layer has a thickness of 0.1 μm to 15 μm.

**10.** A secondary battery of which a preparation method comprises infiltrating an electrode assembly in an electrolyte; wherein the electrode assembly comprises the negative electrode plate according to any one of claims 1 to 9, a separator, and a positive electrode plate, the separator being disposed between the negative electrode plate and the positive electrode plate.

**11.** The secondary battery according to claim 10, wherein a mass of the polymer layer accounts for 0.1% to 4% of a sum of masses of the polymer layer and the electrolyte.

**12.** A battery module, comprises the secondary battery according to claim 10 or 11.

**13.** A battery pack, comprising the battery module according to claim 12.

**14.** An electric apparatus, comprising one or more of the secondary battery according to claim 10 or 11, the battery module according to claim 12, and the battery pack according to claim 13.

**15.** A preparation method of the negative electrode plate according to any one of claims 1 to 9, comprising the following steps:

forming the negative electrode active material layer on at least one surface of the negative electrode current collector;
forming the lithium supplement layer on a surface of the negative electrode active material layer; and
forming the polymer layer on a surface of the lithium supplement layer.

**16.** The preparation method according to claim 15, wherein the forming the polymer layer on a surface of the lithium supplement layer comprises the following steps:
dissolving a polymer in an organic solvent to prepare a polymer solution, applying the polymer solution to the surface of the lithium supplement layer to form a polymer coating layer, followed by drying, to obtain the polymer layer.

**17.** The preparation method according to claim 15 or 16, wherein the organic solvent comprises one or more of dimethyl carbonate, diethyl carbonate, ethyl methyl carbonate, 1,3-dioxolane, diphenyl carbonate, propene sultone, propenyl-1,3 sultone, triphenyl phosphate, triphenyl phosphite, and sulfolane.

**18.** The preparation method according to any one of claims 15 to 17, wherein in the polymer solution, a mass percentage of the polymer is 1% to 15%.

**5**

FIG. 1

5

FIG. 2

FIG. 3

FIG. 4

FIG. 5

6

FIG. 6

<div align="center">

**INTERNATIONAL SEARCH REPORT**

</div>

| International application No. |
| --- |
| **PCT/CN2022/124775** |

**A. CLASSIFICATION OF SUBJECT MATTER**

H01M 4/13(2010.01)i; H01M 4/62(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; DWPI; ENTXT; CNKI: 负极, 集流体, 补锂, 聚合物, 电池, negative electrode, current collector, lithium supplement, polymer, battery

**C. DOCUMENTS CONSIDERED TO BE RELEVANT**

| Category* | Citation of document, with indication, where appropriate, of the relevant passages | Relevant to claim No. |
| --- | --- | --- |
| X | CN 107039633 A (JIANGSU LENENGY BATTERY JOINT-STOCK CO., LTD.) 11 August 2017 (2017-08-11)<br>description, paragraphs 2-31, and figure 1 | 1-7, 9-18 |
| Y | CN 107039633 A (JIANGSU LENENGY BATTERY JOINT-STOCK CO., LTD.) 11 August 2017 (2017-08-11)<br>description, paragraphs 2-31, and figure 1 | 8 |
| Y | CN 110896140 A (CONTEMPORARY AMPEREX TECHNOLOGY CO., LTD.) 20 March 2020 (2020-03-20)<br>description, paragraphs 2-123 | 8 |
| X | CN 111816840 A (CONTEMPORARY AMPEREX TECHNOLOGY CO., LTD.) 23 October 2020 (2020-10-23)<br>description, paragraphs 2-68, and figures 1-2 | 1-7, 9-18 |
| Y | CN 111816840 A (CONTEMPORARY AMPEREX TECHNOLOGY CO., LTD.) 23 October 2020 (2020-10-23)<br>description, paragraphs 2-68, and figures 1-2 | 8 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 January 2023** | **20 January 2023** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2022/124775** |

| C. | DOCUMENTS CONSIDERED TO BE RELEVANT |

| Category* | Citation of document, with indication, where appropriate, of the relevant passages | Relevant to claim No. |
|---|---|---|
| X | CN 113488612 A (KUNSHAN BAOCHUANG NEW ENERGY TECHNOLOGY CO., LTD.) 08 October 2021 (2021-10-08) description, paragraphs 2-218 | 1-7, 9-18 |
| Y | CN 113488612 A (KUNSHAN BAOCHUANG NEW ENERGY TECHNOLOGY CO., LTD.) 08 October 2021 (2021-10-08) description, paragraphs 2-218 | 8 |
| X | CN 112421128 A (CONTEMPORARY AMPEREX TECHNOLOGY CO., LTD.) 26 February 2021 (2021-02-26) description, paragraphs 2-105 | 1-7, 9-18 |
| Y | CN 112421128 A (CONTEMPORARY AMPEREX TECHNOLOGY CO., LTD.) 26 February 2021 (2021-02-26) description, paragraphs 2-105 | 8 |
| Y | CN 111384405 A (CONTEMPORARY AMPEREX TECHNOLOGY CO., LTD.) 07 July 2020 (2020-07-07) description, paragraphs 6-104, and figures 1-2 | 8 |
| A | CN 113381025 A (ZHUHAI COSMX BATTERY CO., LTD.) 10 September 2021 (2021-09-10) entire document | 1-18 |
| A | JP 2001110418 A (TOYOTA CENTRAL RESEARCH AND DEVELOPMENT) 20 April 2001 (2001-04-20) entire document | 1-18 |

Form PCT/ISA/210 (second sheet) (January 2015)

INTERNATIONAL SEARCH REPORT
Information on patent family members

International application No.

**PCT/CN2022/124775**

| Patent document cited in search report | | | Publication date (day/month/year) | Patent family member(s) | | | Publication date (day/month/year) |
|---|---|---|---|---|---|---|---|
| CN | 107039633 | A | 11 August 2017 | None | | | |
| CN | 110896140 | A | 20 March 2020 | EP | 3624234 | A1 | 18 March 2020 |
| | | | | US | 2020091519 | A1 | 19 March 2020 |
| | | | | HU | E054631 | T2 | 28 September 2021 |
| | | | | PL | 3624234 | T3 | 13 September 2021 |
| | | | | CN | 110896140 | B | 15 January 2021 |
| | | | | EP | 3624234 | B1 | 28 April 2021 |
| CN | 111816840 | A | 23 October 2020 | WO | 2020207368 | A1 | 15 October 2020 |
| | | | | EP | 3787094 | A1 | 03 March 2021 |
| | | | | US | 2021210750 | A1 | 08 July 2021 |
| | | | | CN | 111816840 | B | 26 October 2021 |
| CN | 113488612 | A | 08 October 2021 | None | | | |
| CN | 112421128 | A | 26 February 2021 | WO | 2021023196 | A1 | 11 February 2021 |
| | | | | CN | 112421128 | B | 22 October 2021 |
| | | | | EP | 3930065 | A1 | 29 December 2021 |
| | | | | US | 2022059826 | A1 | 24 February 2022 |
| CN | 111384405 | A | 07 July 2020 | WO | 2020133671 | A1 | 02 July 2020 |
| | | | | US | 2022069284 | A1 | 03 March 2022 |
| | | | | EP | 3905396 | A1 | 03 November 2021 |
| | | | | CN | 111384405 | B | 09 November 2021 |
| CN | 113381025 | A | 10 September 2021 | None | | | |
| JP | 2001110418 | A | 20 April 2001 | None | | | |

Form PCT/ISA/210 (patent family annex) (January 2015)

**EP 4 411 857 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022105437419